# EUROPEAN PATENT APPLICATION

(11) **EP 4 468 778 A1**
(43) Date of publication of application: **27.11.2024**
(21) Application number: 24176796.1
(22) Date of filing: 17.05.2024
(51) Int. Cl.: H04W 24/10, H04W 12/45, H04W 36/00, H04W 48/16, H04W 48/12, H04W 76/28

(54) **MULTI USER SIM MEASUREMENT REQUIREMENTS**

(30) Priority: 22.05.2023 US 202363468028 P
(71) Applicant: Nokia Technologies Oy, 02610 Espoo (FI)
(72) Inventor: DALSGAARD, Lars, 90230 Oulu (FI)
(74) Representative: Script Intellectual Property LLP

(57) **Abstract**

In accordance with example embodiments of the invention there is at least a method and apparatus to perform determining measurement requirements for at least one measurement for a neighbour cell of a communication network, wherein the at least one measurement is multiuser subscriber identity module gap assisted measurement, and wherein the measurement requirements are based on a maximum of a discontinuous reception cycle of the neighbour cell and a minimum multiuser subscriber identity module measurement gap repetition period in user equipment; and performing the at least one measurement for the neighbour cell based on the determined measurement requirements.

## Description

### TECHNICAL FIELD:

The teachings in accordance with the exemplary embodiments of this invention relate generally to a periodic multiuser subscriber identity module gap pattern and cell reselection requirement configuration and, more specifically, relate to a periodic multiuser subscriber identity module gap pattern and cell reselection requirement configuration based on one of a discontinuous reception cycle of the cell or a minimum multiuser subscriber identity module measurement gap repetition period among one or more minimum multiuser subscriber identity module measurement gap repetition period(s) in a communication network.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- DRX: discontinuous reception
- MGRP: Measurement Gap Repetition Period
- MUSIM: Multi User SIM
- NW: network
- RAN: random access network
- RRC: radio resource control
- RSRP: reference signal received power
- RSRQ: reference signal received quality
- SIM: subscriber identify module
- SS: synchronization signal
- SSB: synchronization signal block
- SS- RSRP: synchronization signal - reference signal received power
- SS- RSRQ: synchronization signal - reference signal received quality
- UE: user equipment
- WF: way forward

In standards at the time of this application MUSIM gaps have been introduced. While such MUSIM gaps are for a UE, for example, to perform measurements and paging reception in another network (NW-B) than the currently serving network NW-A.

However, no UE requirements were defined for the UE when MUSIM were configured

Example embodiments of this invention proposes improved operations for at least these issues.

### SUMMARY:

This section contains examples of possible implementations and is not meant to be limiting.

In another example aspect of the invention, there is an apparatus, such as a user equipment side apparatus, comprising: at least one processor; and at least one non-transitory memory storing instructions, that when executed by the at least one processor, cause the apparatus at least to: determine measurement requirements for at least one measurement for a neighbour cell of a communication network, wherein the at least one measurement is multiuser subscriber identity module gap assisted measurement, and wherein the measurement requirements are based on a maximum of a discontinuous reception cycle of the neighbour cell and a minimum multiuser subscriber identity module measurement gap repetition period in the apparatus; and perform the at least one measurement for the neighbour cell based on the determined measurement requirements.

In still another example aspect of the invention, there is a method, comprising: determining measurement requirements for at least one measurement for a neighbour cell of a communication network, wherein the at least one measurement is multiuser subscriber identity module gap assisted measurement, and wherein the measurement requirements are based on a maximum of a discontinuous reception cycle of the neighbour cell and a minimum multiuser subscriber identity module measurement gap repetition period in user equipment; and performing the at least one measurement for the neighbour cell based on the determined measurement requirements.

A further example embodiment is an apparatus and a method comprising the apparatus and the method of the previous paragraphs, wherein the measurement for the neighbour cell comprises at least one of: IDLE or inactive mode measurements for network B, measurement and evaluation of serving cell in network B, intra-frequency cell measurements in network B, or inter-frequency cell measurements in network B, wherein the communication network comprises the network B, wherein the Network B is a serving cell in which the user equipment monitors paging messages, wherein there is performing the at least one measurement periodically with a period based on the maximum of a discontinuous reception cycle of the neighbour cell and the minimum multiuser subscriber identity module measurement gap repetition period in the apparatus, wherein the minimum multiuser subscriber identity module measurement gap repetition period is a minimum of a plurality of multiuser subscriber identity module measurement gap repetition periods obtained by the user equipment, wherein the determining comprises a measurement requirements table exchanged identifying a maximum discontinuous reception cycle and a minimum multiuser subscriber identity module measurement gap repetition period, wherein the measurement requirements are based on minimum multiuser subscriber identity module measurement gaps that are overlapping with a reference signal of the neighbour cell to be measured, wherein there is filtering reference signal received power and reference signal received quality measurements of the serving cell using at least two measurements within a set of measurements, wherein the at least two measurements are based on half a discontinuous reception cycle, and/or wherein there is, based on consecutive discontinuous reception cycles not fulfilling a cell reselection criteria of the periodic multiuser subscriber identity module gap pattern and cell reselection requirement configuration, initiating measurements of all neighbor cells of the communication network.

A non-transitory computer-readable medium storing program code, the program code executed by at least one processor to perform at least the method as described in the paragraphs above.

In yet another example aspect of the invention, there is an apparatus comprising: means for determining measurement requirements for at least one measurement for a neighbour cell of a communication network, wherein the at least one measurement is multiuser subscriber identity module gap assisted measurement, and wherein the measurement requirements are based on a maximum of a discontinuous reception cycle of the neighbour cell and a minimum multiuser subscriber identity module measurement gap repetition period in the apparatus; and means for performing the at least one measurement for the neighbour cell based on the determined measurement requirements.

In accordance with the example embodiments as described in the paragraph above, at least the means for determining and performing comprises a network interface, and computer program code stored on a computer-readable medium and executed by at least one processor.

A communication system comprising the user equipment side apparatus performing operations as described above.

### BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:
FIG. 1 shows a Table 4.2.2.2-1: Nserv features;
FIG. 2 shows Table 4.2.2.3-1: Tdetect, NR_Intra, Tmeasure, NR_Intra and Tevaluate,NR_Intra features;
FIG. 3 shows a high level block diagram of various devices used in carrying out various aspects of the invention; and
FIG. 4 shows a method in accordance with example embodiments of the invention which may be performed by an apparatus.

### DETAILED DESCRIPTION:

In example embodiments of this invention there is proposed at least a method and apparatus for a new periodic multiuser subscriber identity module gap pattern and cell reselection requirement configuration based on one of a discontinuous reception cycle of the cell or a minimum multiuser subscriber identity module measurement gap repetition period among one or more minimum multiuser subscriber identity module measurement gap repetition period(s) in a communication network.

As similarly stated above, in standards at the time of this application MUSIM gaps have been introduced. While such MUSIM gaps are for a UE, for example, to perform measurements and paging in another network (NW-B) than the currently serving network NW-A.

However, no UE requirements were defined for the UE when MUSIM were configured

In a RAN4 meeting it was agreed to focus on P2 and the listed sub-options:
- P2: The measurement/cell reselection requirements in IDLE/inactive mode for NW B could reuse the existing idle/inactive requirements as the baseline:
   ∘ P2-1: With DRX cycle replaced by max(DRX cycle, MGRP_max), where MGRP_max is the maximum MGRP among all configured MUSIM gaps. FFS other adaptation;
   ∘ P2-2: DRX cycle is replaced by max(DRX cycle, MGRP); For MUSIM gaps repetition period = 5120ms, requirements need to be added;
   ∘ P2-3: When RAN4 reuses existing IDLE mode cell reselection requirements for NW-B, the UE shall request MUSIM gaps with MGRP larger than 160ms when NW-B configures DRX cycle larger than 640ms.

Looking next at each sub-option:
P2-1: NW-B measurements are performed during allocated MUSIM gaps. UE can request up to 3 periodic MUSIM gaps of which it can be assumed that at least one periodic MUSIM gap would be used for measurements. Another periodic MUSIM gap may be used for paging. However, how and for what purpose the MUSIM gaps are used would be up to the UE implementation.

These NW-B measurement requirements would appear to be based on the allocated MUSIM gaps. Hence, the NW-B requirements should depend on the MUSIM gap pattern and the requested MGRP.

However, this does not seem to a reasonable balance between MUSIM gaps possibly allocated and UE measurement requirements. For example, if the UE requests 1 periodic MUSIM gap pattern for measurements and 1 periodic MUSIM gap pattern for paging reception and then 1 periodic MUSIM gap pattern with an extended length MGRP, the NW-B measurement requirement would be based on the MUSIM gap pattern 3.

Additionally, the above does not distinguish between periodic MUSIM gaps and aperiodic MUSIM gaps.

As the MUSIM gaps are requested by the UE and cannot be changed by the network, the UE can always just request a MUSIM with an extended length MGRP and that would define the UE minimum requirements.

Meanwhile the UE can also request a MUSIM with a shortened length MGRP which is then NOT used for defining UE requirements.

It is noted that the network cannot avoid this - only by not configuring the MUSM gaps (which may not be that simple in practice).

Further, this does not seem to a reasonable balance between MUSIM gaps possibly allocated and UE measurement requirements. For example, if the UE requests 1 periodic MUSIM gap pattern for measurements and 1 periodic MUSIM gap pattern for paging reception and then 1 periodic MUSIM gap pattern with an extended length MGRP, the NW-B measurement requirement would be based on the MUSIM gap pattern 3.

Additionally, this does not distinguish between periodic MUSIM gaps and aperiodic MUSIM gaps, and indicates MGRP_max is the maximum MGRP among all configured MUSIM gaps.

This may lead to very relaxed neighbor cell measurement requirements (too infrequent measurements and thus not reliable any more). In practice there will be no UE requirements. For example, NW-B cell reselection may then fail.

To solve the problem (too relaxed UE requirement leading to for example cell reselection fails due to too infrequent initiation of neighbor cell measurements), the P2-1 proposal proposed that the UE measurement requirements can be based on max(DRX cycle, MGRP_max). MGRP_max is the maximum MGRP among all configured MUSIM gaps. Hence, it is agnostic towards aperiodic gaps. An aperiodic gap can be requested long time ahead and hence this requirement becomes unclear. In addition, it is possible that aperiodic gaps don't have an MGRP.

P2-1 is not a reasonable solution for measurement/cell reselection requirements in IDLE/inactive mode for NW B.

P2-2: Similar to what of which it can be assumed related to P2-1 this proposal does not seem reasonable in term of MUSIM gap allocation and the UE requirements. Here, the NW-B measurement requirements would then always be based on 5120ms.

The principle of using a selection between the MUSIM MGRP and the DRX cycle of the NW-B is fine. However, there need to be a balance between these with the aim of having reasonable requirements for NW-B and allocated MUSIM gaps.

P2-2 is not a reasonable solution for measurement/cell reselection requirements in IDLE/inactive mode for NW B.

P2-3 tries to address the aspects of balancing the NW-B measurement requirements and the MUSIM MGRP. Here, the proposal adds a lower limit on the requested MGRP. However, this lower limit is conditioned on the NW-B DRX cycle. To us it is not clear if the NW-A is aware of the DRX cycle (paging cycle).

However, it can be assumed that the NW-B requirements would have to balance with the requested and allocated MUSIM gap MGRP. There is not seen a need to have stricter measurement requirements for NW-B than what is defined for NW-A. However, if short MUSIM MGRP is allocated, there can also be expected that this is reflected in the UE NW-B measurement requirements.

P2-3 is not a reasonable solution for measurement/cell reselection requirements in IDLE/inactive mode for NW B.

The principle of using a selection between the MUSIM MGRP and the DRX cycle of the NW-B is fine. However, there need to be a balance between these with the aim of having reasonable requirements for NW-B and allocated MUSIM gaps.

In accordance with example embodiments of the invention UE measurement requirements for measurement/cell reselection requirements in IDLE/inactive mode for NW B, can be based on a reasonable balance between allocated MUSIM gap and NW-B DRX cycle. It is proposed that in accordance with an example embodiment of the invention that the UE measurement requirements can be based on max (DRX cycle (of NW-B), minimum MGRP among all configured MUSIM gaps). In one example only MRGP of allocated periodic MUSIM gaps are considered.

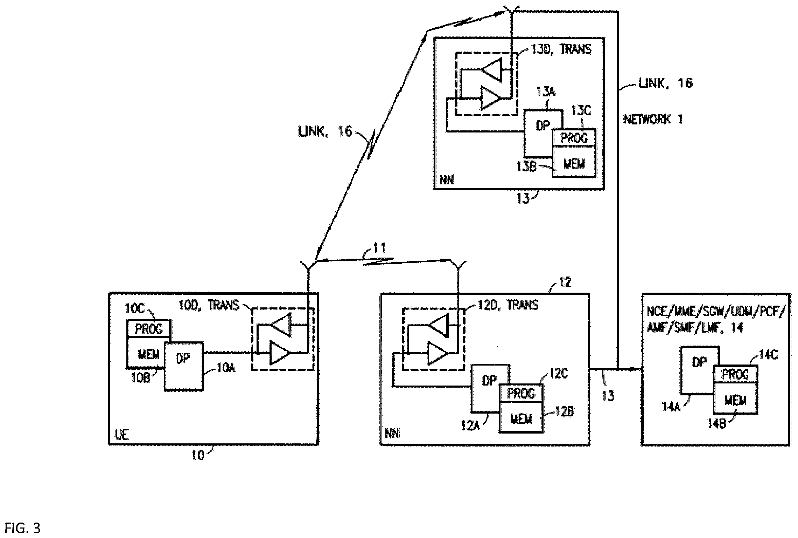

Before describing the example embodiments as disclosed herein in detail, reference is made to FIG. 3 for illustrating a simplified block diagram of various electronic devices that are suitable for use in practicing the example embodiments of this invention.

FIG. 3 shows a block diagram of one possible and non-limiting exemplary system in which the example embodiments may be practiced. In FIG. 3, a user equipment (UE) 10 is in wireless communication with a wireless network 1 or network, 1 as in FIG. 3. The wireless network 1 or network 1 as in FIG. 3 can comprise a communication network such as a mobile network e.g., the mobile network 1 or first mobile network as disclosed herein. Any reference herein to a wireless network 1 as in FIG. 3 can be seen as a reference to any wireless network as disclosed herein. Further, the wireless network 1 as in FIG. 3 can also comprises hardwired features as may be required by a communication network. A UE is a wireless, typically mobile device that can access a wireless network. The UE, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 10 includes one or more processors DP 10A, one or more memories MEM 10B, and one or more transceivers TRANS 10D interconnected through one or more buses. Each of the one or more transceivers TRANS 10D includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers TRANS 10D which can be optionally connected to one or more antennas for communication to NN 12 and NN 13, respectively. The one or more memories MEM 10B include computer program code PROG 10C. The UE 10 communicates with NN 12 and/or NN 13 via a wireless link 11 or 16.

The NN 12 (NR/5G Node B, an evolved NB, or LTE device) is a network node such as a master or secondary node base station (e.g., for NR or LTE long term evolution) that communicates with devices such as NN 13 and UE 10 of FIG. 3. The NN 12 provides access to wireless devices such as the UE 10 to the wireless network 1. The NN 12 includes one or more processors DP 12A, one or more memories MEM 12B, and one or more transceivers TRANS 12D interconnected through one or more buses. In accordance with the example embodiments these TRANS 12D can include X2 and/or Xn interfaces for use to perform the example embodiments. Each of the one or more transceivers TRANS 12D includes a receiver and a transmitter. The one or more transceivers TRANS 12D can be optionally connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13 such as via link 16. Further, the link 11, link 16 and/or any other link may be wired or wireless or both and may implement, e.g., an X2 or Xn interface. Further the link 11 and/or link 16 may be through other network devices such as, but not limited to an NCE/MME/SGW/UDM/PCF/AMF/SMF/LMF 14 device as in FIG. 3. The NN 12 may perform functionalities of an MME (Mobility Management Entity) or SGW (Serving Gateway), such as a User Plane Functionality, and/or an Access Management functionality for LTE and similar functionality for 5G.

The NN 13 can be for WiFi or Bluetooth or other wireless device associated with a mobility function device such as an AMF or SMF, further the NN 13 may comprise a NR/5G Node B or possibly an evolved NB a base station such as a master or secondary node base station (e.g., for NR or LTE long term evolution) that communicates with devices such as the NN 12 and/or UE 10 and/or the wireless network 1. The NN 13 includes one or more processors DP 13A, one or more memories MEM 13B, one or more network interfaces, and one or more transceivers TRANS 13D interconnected through one or more buses. In accordance with the example embodiments these network interfaces of NN 13 can include X2 and/or Xn interfaces for use to perform the example embodiments. Each of the one or more transceivers TRANS 13D includes a receiver and a transmitter that can optionally be connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., link 11 or link 16 or another link. The Link 16 as shown in FIG. 3 can be used for communication with the NN12. These links maybe wired or wireless or both and may implement, e.g., an X2 or Xn interface. Further, as stated above the link 11 and/or link 16 may be through other network devices such as, but not limited to an NCE/MME/SGW device such as the NCE/MME/SGW/UDM/PCF/AMF/SMF/LMF 14 of FIG. 3.

The one or more buses of the device of FIG. 3 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH), with the other elements of the NN 12 being physically in a different location from the RRH, and these devices can include one or more buses that could be implemented in part as fiber optic cable to connect the other elements of the NN 12 to a RRH.

It is noted that although FIG. 3 shows a network nodes such as NN 12 and NN 13, any of these nodes may can incorporate or be incorporated into an eNodeB or eNB or gNB such as for LTE and NR, and would still be configurable to perform example embodiments.

Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The wireless network 1 or any network it can represent may or may not include a NCE/MME/SGW/UDM/PCF/AMF/SMF/LMF 14 that may include (NCE) network control element functionality, MME (Mobility Management Entity)/SGW (Serving Gateway) functionality, and/or serving gateway (SGW), and/or MME (Mobility Management Entity) and/or SGW (Serving Gateway) functionality, and/or user data management functionality (UDM), and/or PCF (Policy Control) functionality, and/or Access and Mobility Management Function (AMF) functionality, and/or Session Management (SMF) functionality, and/or Location Management Function (LMF), and/or Authentication Server (AUSF) functionality and which provides connectivity with a further network, such as a telephone network and/or a data communications network (e.g., the Internet), and which is configured to perform any 5G and/or NR operations in addition to or instead of other standard operations at the time of this application. The NCE/MME/SGW/UDM/PCF/AMF/SMF/LMF 14 is configurable to perform operations in accordance with example embodiments in any of an LTE, NR, 5G and/or any standards based communication technologies being performed or discussed at the time of this application. In addition, it is noted that the operations in accordance with example embodiments, as performed by the NN 12 and/or NN 13, may also be performed at the NCE/MME/SGW/UDM/PCF/AMF/SMF/LMF 14.

The NCE/MME/SGW/UDM/PCF/AMF/SMF/LMF 14 includes one or more processors DP 14A, one or more memories MEM 14B, and one or more network interfaces (N/W I/F(s)), interconnected through one or more buses coupled with the link 13 and/or link 16. In accordance with the example embodiments these network interfaces can include X2 and/or Xn interfaces for use to perform the example embodiments. The one or more memories MEM 14B include computer program code PROG 14C. The one or more memories MEM14B and the computer program code PROG 14C are configured to, with the one or more processors DP 14A, cause the NCE/MME/SGW/UDM/PCF/AMF/SMF/LMF 14 to perform one or more operations which may be needed to support the operations in accordance with the example embodiments.

It is noted that that the NN 12 and/or NN 13 and/or UE 10 can be configured (e.g. based on standards implementations etc.) to perform functionality of a Location Management Function (LMF). The LMF functionality may be embodied in any of these network devices or other devices associated with these devices. In addition, an LMF such as the LMF of the MME/SGW/UDM/PCF/AMF/SMF/LMF 14 of FIG. 3, as at least described below, can be co-located with UE 10 such as to be separate from the NN 12 and/or NN 13 of FIG. 3 for performing operations in accordance with example embodiments as disclosed herein.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10, DP12A, DP13A, and/or DP14A and memories MEM 10B, MEM 12B, MEM 13B, and/or MEM 14B, and also such virtualized entities create technical effects.

The computer readable memories MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 12B, MEM 13B, and MEM 14B may be means for performing storage functions. The processors DP10, DP12A, DP13A, and DP14A may be of any type suitable to the local technical environment, and may include one or more of general purpose computers, special purpose computers, microprocessors, digital signal processors (DSPs) and processors based on a multi-core processor architecture, as non-limiting examples. The processors DP10, DP12A, DP13A, and DP14A may be means for performing functions, such as controlling the UE 10, NN 12, NN 13, and other functions as described herein.

In general, various embodiments of any of these devices can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

In In accordance with example embodiments of the invention a User Equipment (UE) is adapted to be equipped with a plurality of Universal Subscriber Identity Modules (USIMs) for performing Multi-Universal Subscriber Identity Module (MUSIM) operations.

In accordance with example embodiments of the invention if the UE is configured with a MUSIM MGRP which is equal to or less than the NW-B DRX cycle, the NW-B measurement requirement will be based on the DRX cycle of the NW-B. Otherwise, (if the minimum MUSIM MGRP which is longer than the NW-B DRX cycle) the NW-B requirements will be based on the minimum MUSIM MGRP.

This will allow having a balanced measurement requirement for the UE for NW-B, which is not stricter than NW-A measurement requirements, while accounting the allocated MUSIM gaps.

It is noted that in accordance with example embodiments of the invention a `DRX cycle' as discussed herein can be a default `DRX cycle' (or a dummy DRX cycle). The dummy DRX cycle could be as only examples one of: 0.32, 0.64, 1.28 or 2.56. In addition, in accordance with example embodiments of the invention the dummy DRX cycle could be configured by network A or B e.g., by a source cell or a neighbor cell, or there could be a request that UE shall at least request a MUSIM gap with MRGP of a longer MRGP for example one of: 0.32, 0.64, 1.28 or 2.56 seconds.

In accordance with example embodiments of the invention the measurement/cell reselection requirements in IDLE/inactive mode for NW B could reuse the existing idle/inactive requirements as the baseline, with DRX cycle replaced:
Max(DRX cycle, Min(MUSIM gap MGRP)).

Where (MUSIM gap MGRP) includes the MGRP from all UE configured periodic MUSIM gaps.

Example embodiments of the invention relates to UE measurement requirements, especially to MUSIM gaps and MUSIM Network B measurement requirement.

For an MUSIM case, a UE is expected to perform operations, including neighbor cell measurements, in non-serving NW-B during MUSIM gaps.

In accordance with example embodiments of the invention, a UE may request MUSIM gaps for performing one or more procedures in NW-B, including neighbor cell measurements, paging. For what purpose the MUSIM gaps are used is up to the UE implementation. Here, the UE requests MUSIM gaps, and the NW either accepts or rejects the request, but NW may not change MUSIM gap values.

In the UE intra-frequency requirements the DRX cycle in the requirements table will be exchanged with Max(DRX cycle, Min(MUSIM gap MRGP)).

Additionally, as these Network B requirements will be based on MUSIM gaps and they have to be overlapping with the Network B reference signal (RS) to be measured, the current M1 scaling factor which is applied due to misalignment between SSB and DRX can be excluded.

Hence, the UE requirements for performing MUSIM gap assisted Network B measurement would be: Measurement and evaluation of serving cell in network B.

In general, the UE may measure the reference signal received power (RSRP) of each of the SSB transmit beams on each of the receive beams of the UE to select transmit and receive beams based on the measured RSRP.

The UE shall measure the SS-RSRP and SS-RSRQ level of the serving cell and evaluate the cell selection criterion S defined in TS 38.304 for the serving cell at least once every N1 DRX cycle, possibly excluding any M1 scaling factor.

The UE shall filter the SS-RSRP and SS-RSRQ measurements of the serving cell using at least 2 measurements. Within the set of measurements used for the filtering, at least two measurements shall be spaced by, at least DRX cycle/2.

In accordance with an example embodiments of the invention, the UE may indicate an outcome of: maximum of a discontinuous reception cycle of the neighbour cell and/or a minimum multiuser subscriber identity module measurement gap repetition period.

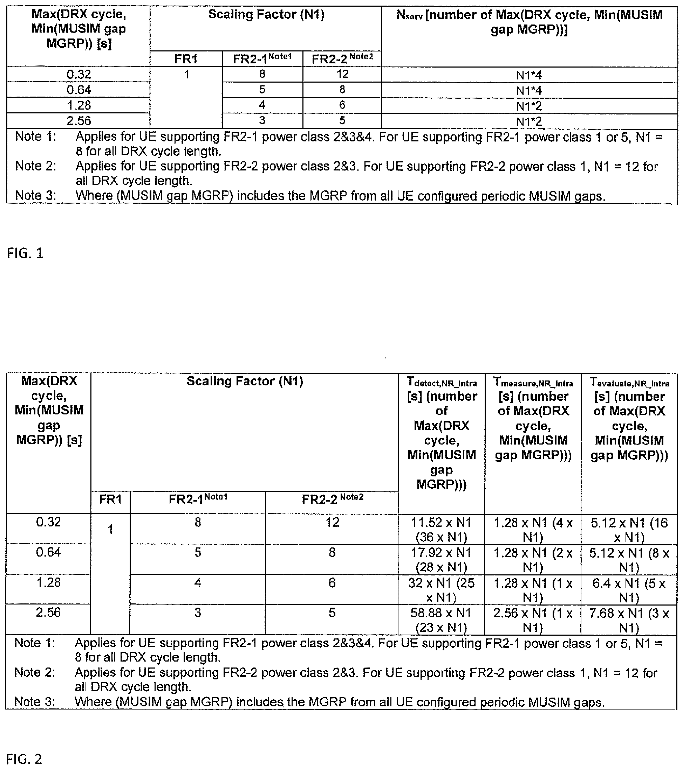

FIG. 1 shows a Table 4.2.2.2-1: Nserv features. As shown in FIG. 1 there is a Max(DRX cycle, Min (MUSIM) gap MGRP(s) of 0.32, 0.64, 1.28, and 2,56, a scaling factor (N1) including FR1, FR2-1 (note1), FR2-2(note2) values, and Nserv [number of Max(DRX cycle, Min(MUSIM gap MGRP) values. It can be seen that Note1 of FIG. 1 applies for UE supporting FR2-1 power class 2&3&4, and for UE supporting FR2-1 power class 1 or 5, N1 = 8 for all DRX cycle length. As can be seen with Note2 of FIG. 1 applies for UE supporting FR2-2 power class 2&3, and for UE supporting FR2-2 power class 1, N1 = 12 for all DRX cycle length.

If the UE has evaluated according to of FIG. 1 Table 4.2.2.2-1 in Nₛₑᵣᵥ consecutive DRX cycles that the serving cell does not fulfil the cell selection criterion S, the UE shall initiate the measurements of all neighbour cells indicated by the serving cell, regardless of the measurement rules currently limiting UE measurement activities.

In accordance with an example embodiments of the invention, the UE can indicate a DRX cycle of network B to a serving cell.

Further, as stated above, the UE may request MUSIM gaps for performing one or more procedures in NW-B, including neighbor cell measurements, paging. For what purpose the MUSIM gaps are used is up to the UE implementation. Here, the UE requests MUSIM gaps, and the NW either accepts or rejects the request, but NW may not change MUSIM gap values.

If the UE in RRC_IDLE has not found any new suitable cell based on searches and measurements using the intra-frequency, inter-frequency and inter-RAT information indicated in the system information for 10 s, the UE shall initiate cell selection procedures for the selected PLMN as defined in TS 38.304.

For neighbour cells (or measurements of other cells than serving cell) in Network B measurements of intra-frequency NR cells in Network B include:

The UE shall be able to identify new intra-frequency cells and perform SS-RSRP and SS-RSRQ measurements of the identified intra-frequency cells without an explicit intra-frequency neighbour list containing physical layer cell identities.

The UE shall be able to evaluate whether a newly detectable intra-frequency cell meets the reselection criteria defined in TS38.304 within T_{detect,NR_Intra} when that Treselection= 0 . An intra frequency cell is considered to be detectable according to the conditions defined in Annex B.1.2 for a corresponding Band.

FIG. 2 shows Table 4.2.2.3-1: Tdetect, NR_Intra, Tmeasure, NR_Intra and Tevaluate,NR_Intra features.

As shown in FIG. 2 there is a Max(DRX cycle, Min (MUSIM) gap MGRP(s) of 0.32, 0.64, 1.28, and 2,56, a scaling factor (N1) including FR1, FR2-1 (note1), FR2-2(note2) values, and Tdetect, NR_Intra(s) [number of Max(DRX cycle, Min(MUSIM gap MGRP) values, Tmeasure NR_Intra(s) [number of Max(DRX cycle, Min(MUSIM gap MGRP) values, and Tevaluate NR_Intra(s) [number of Max(DRX cycle, Min(MUSIM gap MGRP) values. It can be seen that Note1 of FIG. 1 applies for UE supporting FR2-1 power class 2&3&4, and for UE supporting FR2-1 power class 1 or 5, N1 = 8 for all DRX cycle length. As can be seen with Note2 of FIG. 1 applies for UE supporting FR2-2 power class 2&3, and for UE supporting FR2-2 power class 1, N1 = 12 for all DRX cycle length. Further, Note3 of FIG. 2 where (MUSIM gap MGRP) includes the MGRP from all UE configured periodic MUSIM gap.

The UE shall measure SS-RSRP and SS-RSRQ at least every T_{measure,NR_Intra} (see FIG. 2 Table 4.2.2.3-1 Tdetect,NR_Intra, Tmeasure,NR_Intra and Tevaluate,NR_Intra) for intra-frequency cells that are identified and measured according to the measurement rules and M2 may be excluded.

The UE shall filter SS-RSRP and SS-RSRQ measurements of each measured intra-frequency cell using at least 2 measurements. Within the set of measurements used for the filtering, at least two measurements shall be spaced by at least T_{measure,NR_Intra}/2.

The UE shall not consider a NR neighbour cell in cell reselection, if it is indicated as not allowed in the measurement control system information of the serving cell.

For an intra-frequency cell that has been already detected, but that has not been reselected to, the filtering shall be such that the UE shall be capable of evaluating that the intra-frequency cell has met reselection criterion defined in TS38.304 within T_{evaluate,NR_Intra} when T_{reselection} = 0 as specified in at least FIG. 2 Table 4.2.2.3-1 provided that:
when *rangeToBestCell* is not configured:
- the cell is at least 3dB better ranked in FR1 or 4.5dB better ranked in FR2. when *rangeToBestCell* is configured:
- the cell has the highest number of beams above the threshold *absThreshSS-BlocksConsolidation* among all detected cells whose cell-ranking criterion R value in TS38.304 is within *rangeToBestCell* of the cell-ranking criterion R value of the highest ranked cell;
   - if there are multiple such cells, the cell has the highest rank among them,
      - the cell is at least 3dB better ranked in FR1 or 4.5dB better ranked in FR2 if the current serving cell is among them.

When evaluating cells for reselection, the SSB side conditions apply to both serving and non-serving intra-frequency cells.

If T_{reselection} timer has a non zero value and the intra-frequency cell is satisfied with the reselection criteria which are defined in TS38.304, the UE shall evaluate this intra-frequency cell for the T_{reselection} time. If this cell remains satisfied with the reselection criteria within this duration, then the UE shall reselect that cell.

For UE neither configured with *highSpeedMeasFlag-r16* nor *highSpeedMeasFlagFR2-r17*, T_{detect,NR_Intra,} T_{measure,NR_Intra} and T_{evaluate, NR_intra} are specified in FIG. 2 Table 4.2.2.3-1. For UE configured with *highSpeedMeasFlag-r16*, T_{detect,NR_Intra,} T_{measure,NR_Intra} and T_{evaluate, NR_Intra} are specified. For FR2 power class 6 UE configured with *highSpeedMeasFlagFR2-r17*, T_{detect,NR_Intra}, T_{measure,NR_Intra} and Tₑᵥₐₗᵤₐₜₑ, _{NR_intra} are specified.

The requirements may only apply when the UE supports *measurementEnhancement-r16* or *intraNR-MeasurementEnhancement-r16.* For UE neither supporting either *measurementEnhancement-r16* nor *intraNR-MeasurementEnhancement-r16*, the UE is not required to meet the requirements.

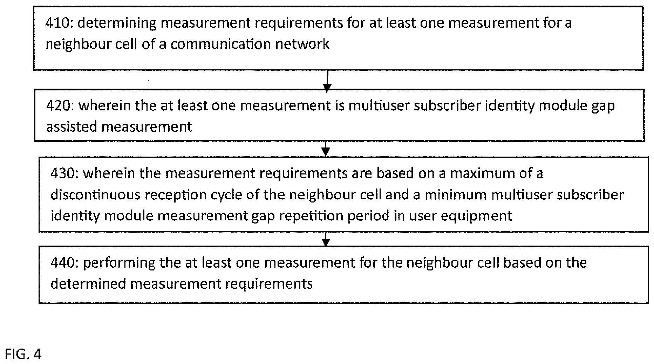

FIG. 4 shows a method in accordance with example embodiments of the invention which may be performed by an apparatus.

FIG. 4 illustrates operations which may be performed by a device such as, but not limited to, a device such as a network device (e.g., the UE 10 as in FIG. 3). As shown in block 410 of FIG 4 there is determining measurement requirements for at least one measurement for a neighbour cell of a communication network. As shown in block 420 of FIG. 4, wherein the at least one measurement is multiuser subscriber identity module gap assisted measurement. As shown in block 430 of FIG. 4 wherein the measurement requirements are based on a maximum of a discontinuous reception cycle of the neighbour cell and a minimum multiuser subscriber identity module measurement gap repetition period in user equipment. Then as shown in block 440 of FIG. 4 there is performing the at least one measurement for the neighbour cell based on the determined measurement requirements.

In accordance with the example embodiments as described in the paragraph above, wherein the measurement for the neighbour cell comprises at least one of: IDLE or inactive mode measurements for network B, measurement and evaluation of serving cell in network B, intra-frequency cell measurements in network B, or inter-frequency cell measurements in network B.

In accordance with the example embodiments as described in the paragraphs above, wherein the communication network comprises the network B.

In accordance with the example embodiments as described in the paragraphs above, wherein the Network B is a serving cell in which the user equipment monitors paging messages.

In accordance with the example embodiments as described in the paragraphs above, wherein there is performing the at least one measurement periodically with a period based on the maximum of a discontinuous reception cycle of the neighbour cell and the minimum multiuser subscriber identity module measurement gap repetition period in the apparatus.

In accordance with the example embodiments as described in the paragraphs above, wherein the minimum multiuser subscriber identity module measurement gap repetition period is a minimum of a plurality of multiuser subscriber identity module measurement gap repetition periods obtained by the user equipment.

In accordance with the example embodiments as described in the paragraphs above, wherein the determining comprises a measurement requirements table exchanged identifying a maximum discontinuous reception cycle and a minimum multiuser subscriber identity module measurement gap repetition period.

In accordance with the example embodiments as described in the paragraphs above, wherein the measurement requirements are based on minimum multiuser subscriber identity module measurement gaps that are overlapping with a reference signal of the neighbour cell to be measured.

In accordance with the example embodiments as described in the paragraphs above, wherein there is filtering reference signal received power and reference signal received quality measurements of the serving cell using at least two measurements within a set of measurements.

In accordance with the example embodiments as described in the paragraphs above, wherein the at least two measurements are based on half a discontinuous reception cycle.

In accordance with the example embodiments as described in the paragraphs above, wherein there is, based on consecutive discontinuous reception cycles not fulfilling a cell reselection criteria of the periodic multiuser subscriber identity module gap pattern and cell reselection requirement configuration, initiating measurements of all neighbor cells of the communication network.

In accordance with an example embodiment of the invention as described above there is an apparatus comprising: means for determining (one or more transceivers 10D; MEM 10B; PROG 10C; and DP 10A as in FIG. 3) measurement requirements for at least one measurement for a neighbour cell of a communication network, wherein the at least one measurement is multiuser subscriber identity module gap assisted measurement, and wherein the measurement requirements are based on a maximum of a discontinuous reception cycle of the neighbour cell and a minimum multiuser subscriber identity module measurement gap repetition period in the apparatus; and means for performing (one or more transceivers 10D; MEM 10B; PROG 10C; and DP 10A as in FIG. 3) the at least one measurement for the neighbour cell based on the determined measurement requirements

In the example aspect of the invention according to the paragraph above, wherein at least the means for determining and performing comprises a non-transitory computer readable medium [MEM 10B as in FIG. 3] encoded with a computer program [PROG 10C as in FIG. 3] executable by at least one processor [DP 10A as in FIG. 3].

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and
(c) hardware circuit(s) and or processor(s), such as a microprocessor(s) or a portion of a microprocessor(s), that requires software (e.g., firmware) for operation, but the software may not be present when it is not needed for operation."

In accordance with example embodiments of the invention, there is adequate circuitry for performing at least novel operations in accordance with example embodiments of the invention as disclosed in this application, this 'circuitry' as may be used herein refers to at least the following:
(a) hardware-only circuit implementations (such as implementations in only analog and/or digital circuitry); and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

Further aspects useful for understanding the invention are given in the following numbered paragraphs:
1. An apparatus, comprising:
   at least one processor; and
   at least one non-transitory memory storing instructions, that when executed by the at least one processor, cause the apparatus at least to:
      determine measurement requirements for at least one measurement for a neighbour cell of a communication network,
      wherein the at least one measurement is multiuser subscriber identity module gap assisted measurement, and
      wherein the measurement requirements are based on a maximum of a discontinuous reception cycle of the neighbour cell and a minimum multiuser subscriber identity module measurement gap repetition period in the apparatus; and
      perform the at least one measurement for the neighbour cell based on the determined measurement requirements.
2. The apparatus of paragraph 1, wherein the at least one measurement for the neighbour cell comprises at least one of:
   IDLE or inactive mode measurements for network B,
   measurement and evaluation of serving cell in network B,
   intra-frequency cell measurements in network B, or
   inter-frequency cell measurements in network B.
3. The apparatus of paragraph 2, wherein the communication network comprises the
   network B, and wherein the Network B is a serving cell in which the apparatus monitors paging messages.
4. The apparatus of paragraph 1, wherein the at least one non-transitory memory storing instructions is executed by the at least one processor to cause the apparatus at least to:
   perform the at least one measurement periodically with a period based on the maximum of a discontinuous reception cycle of the neighbour cell and the minimum multiuser subscriber identity module measurement gap repetition period in the apparatus.
5. The apparatus of paragraph 1, wherein the minimum multiuser subscriber identity
   module measurement gap repetition period is a minimum of a plurality of multiuser subscriber identity module measurement gap repetition periods obtained by the apparatus.
6. The apparatus of paragraph 1, wherein the determining comprises a measurement
   requirements table exchanged identifying a maximum discontinuous reception cycle and a minimum multiuser subscriber identity module measurement gap repetition period.
7. The apparatus of paragraph 6, wherein the measurement requirements are based on minimum
   multiuser subscriber identity module measurement gaps that are overlapping with a reference signal of the neighbour cell to be measured.
8. The apparatus of paragraph 1, wherein the at least one non-transitory memory storing instructions is executed by the at least one processor to cause the apparatus at least to:
   filter reference signal received power and reference signal received quality measurements of the serving cell using at least two measurements within a set of measurements,
   wherein the at least two measurements are based on half a discontinuous reception cycle.
9. The apparatus of paragraph 1, wherein the at least one non-transitory memory storing instructions is executed by the at least one processor to cause the apparatus at least to:
   based on consecutive discontinuous reception cycles not fulfilling a cell reselection criteria of the periodic multiuser subscriber identity module gap pattern and cell reselection requirement configuration, initiate measurements of all neighbor cells of the communication network.
10. A method, comprising:
   determining measurement requirements for at least one measurement for a neighbour cell of a communication network,
   wherein the at least one measurement is multiuser subscriber identity module gap assisted measurement, and
   wherein the measurement requirements are based on a maximum of a discontinuous reception cycle of the neighbour cell and a minimum multiuser subscriber identity module measurement gap repetition period in user equipment; and
   performing the at least one measurement for the neighbour cell based on the determined measurement requirements.
11. The method of paragraph 10, wherein the at least one measurement for the neighbour cell comprises at least one of:
   IDLE or inactive mode measurements for network B,
   measurement and evaluation of serving cell in network B,
   intra-frequency cell measurements in network B, or
   inter-frequency cell measurements in network B.
12. The method of paragraph 11, wherein the communication network comprises the
   network B, and wherein the Network B is a serving cell in which the user equipment monitors paging messages.
13. The method of paragraph 10, comprising:
   performing the at least one measurement periodically with a period based on the maximum of a discontinuous reception cycle of the neighbour cell and the minimum multiuser subscriber identity module measurement gap repetition period in the user equipment.
14. The apparatus of paragraph 10, wherein the minimum multiuser subscriber identity
   module measurement gap repetition period is a minimum of a plurality of multiuser subscriber identity module measurement gap repetition periods obtained by the user equipment.
15. The method of paragraph 10, wherein the determining comprises a measurement
   requirements table exchanged identifying a maximum discontinuous reception cycle and a minimum multiuser subscriber identity module measurement gap repetition period.
16. The method of paragraph 5, wherein the measurement requirements are based on
   minimum multiuser subscriber identity module measurement gaps that are overlapping with a reference signal of the neighbour cell to be measured.
17. The method of paragraph 1, comprising:
   filtering reference signal received power and reference signal received quality measurements of the serving cell using at least two measurements within a set of measurements,
   wherein the at least two measurements are based on half a discontinuous reception cycle.
18. The method of paragraph 1, comprising:
   based on consecutive discontinuous reception cycles not fulfilling a cell reselection criteria of the periodic multiuser subscriber identity module gap pattern and cell reselection requirement configuration, initiating measurements of all neighbor cells of the communication network.

## Claims

1. An apparatus, comprising:
at least one processor; and
at least one non-transitory memory storing instructions, that when executed by the at least one processor, cause the apparatus at least to:
determine measurement requirements for at least one measurement for a neighbour cell of a communication network,
wherein the at least one measurement is multiuser subscriber identity module gap assisted measurement, and
wherein the measurement requirements are based on a maximum of a discontinuous reception cycle of the neighbour cell and a minimum multiuser subscriber identity module measurement gap repetition period in the apparatus; and
perform the at least one measurement for the neighbour cell based on the determined measurement requirements.

2. The apparatus of claim 1, wherein the at least one measurement for the neighbour cell comprises at least one of:
IDLE or inactive mode measurements for network B,
measurement and evaluation of serving cell in network B,
intra-frequency cell measurements in network B, or
inter-frequency cell measurements in network B.

3. The apparatus of claim 2, wherein the communication network comprises the network B, and wherein the Network B is a serving cell in which the apparatus monitors paging messages.

4. The apparatus of claim 1, wherein the at least one non-transitory memory storing instructions is executed by the at least one processor to cause the apparatus at least to:
perform the at least one measurement periodically with a period based on the maximum of a discontinuous reception cycle of the neighbour cell and the minimum multiuser subscriber identity module measurement gap repetition period in the apparatus.

5. The apparatus of claim 1, wherein the minimum multiuser subscriber identity module measurement gap repetition period is a minimum of a plurality of multiuser subscriber identity module measurement gap repetition periods obtained by the apparatus.

6. The apparatus of claim 1, wherein the determining comprises a measurement requirements table exchanged identifying a maximum discontinuous reception cycle and a minimum multiuser subscriber identity module measurement gap repetition period.

7. The apparatus of claim 6, wherein the measurement requirements are based on minimum
multiuser subscriber identity module measurement gaps that are overlapping with a reference signal of the neighbour cell to be measured.

8. The apparatus of claim 1, wherein the at least one non-transitory memory storing instructions is executed by the at least one processor to cause the apparatus at least to:
filter reference signal received power and reference signal received quality measurements of the serving cell using at least two measurements within a set of measurements,
wherein the at least two measurements are based on half a discontinuous reception cycle.

9. The apparatus of claim 1, wherein the at least one non-transitory memory storing instructions is executed by the at least one processor to cause the apparatus at least to:
based on consecutive discontinuous reception cycles not fulfilling a cell reselection criteria of the periodic multiuser subscriber identity module gap pattern and cell reselection requirement configuration, initiate measurements of all neighbor cells of the communication network.

10. A method, comprising:
determining measurement requirements for at least one measurement for a neighbour cell of a communication network,
wherein the at least one measurement is multiuser subscriber identity module gap assisted measurement, and
wherein the measurement requirements are based on a maximum of a discontinuous reception cycle of the neighbour cell and a minimum multiuser subscriber identity module measurement gap repetition period in user equipment; and
performing the at least one measurement for the neighbour cell based on the determined measurement requirements.

11. The method of claim 10, wherein the at least one measurement for the neighbour cell comprises at least one of:
IDLE or inactive mode measurements for network B,
measurement and evaluation of serving cell in network B,
intra-frequency cell measurements in network B, or
inter-frequency cell measurements in network B.

12. The method of claim 11, wherein the communication network comprises the network B, and wherein the Network B is a serving cell in which the user equipment monitors paging messages.

13. The method of claim 10, comprising:
performing the at least one measurement periodically with a period based on the maximum of a discontinuous reception cycle of the neighbour cell and the minimum multiuser subscriber identity module measurement gap repetition period in the user equipment.

14. The method of claim 10, wherein the minimum multiuser subscriber identity module measurement gap repetition period is a minimum of a plurality of multiuser subscriber identity module measurement gap repetition periods obtained by the user equipment.

15. The method of claim 10, wherein the determining comprises a measurement requirements table exchanged identifying a maximum discontinuous reception cycle and a minimum multiuser subscriber identity module measurement gap repetition period.
